# EUROPÄISCHE PATENTANMELDUNG

(11) **EP 2 642 425 A1**
(43) Veröffentlichungstag der Anmeldung: **25.09.2013**
(21) Anmeldenummer: 12160878.0
(22) Anmeldetag: 22.03.2012
(51) Int. Cl.: G06K 9/00

(54) **Verfahren und Vorrichtung zum Auswerten von Ergebnissen einer Blickerfassung**

(71) Anmelder: SensoMotoric Instruments GmbH, 14513 Teltow (DE)
(72) Erfinder: Williams, Denis, 13156 Berlin (DE); Dr. Hoffmann, Jan, 14167 Berlin (DE)
(74) Vertreter: Pfenning, Meinig & Partner GbR

(57) **Zusammenfassung**

Die Erfindung betrifft ein Verfahren und eine Vorrichtung zum Auswerten von Ergebnissen einer Blickerfassung, wobei diese Ergebnisse vorliegen oder gewonnen werden als Informationen, die für jeden von einer Vielzahl aufeinanderfolgender Zeitpunkte jeweils eine zu diesem Zeitpunkt detektierte Blickrichtung und einen dadurch identifizierten Blickpunkt (12) in einem diesem Zeitpunkt zugeordneten Szenenbild (10) definieren. Die Erfindung sieht dazu die Durchführung folgender Schritte vor:
- Auswerten einer zeitlichen Änderung der Blickrichtung und/oder des Blickpunkts (12) zum Identifizieren verschiedener Blickereignisse, die sich durch unterschiedliche Geschwindigkeiten (v) einer Augenbewegung voneinander unterscheiden, wobei Sakkaden (14) und Fixationen (16) und/oder Folgebewegungen (15) als verschiedene Arten von Blickereignissen erkannt und die identifizierten Blickereignisse nach ihrer Art klassifiziert werden,
- Einteilen eines durch die Zeitpunkte aufgespannten Zeitraums in Intervalle derart, dass jedem der identifizierten Blickereignisse ein Intervall zugeordnet wird, das einer Dauer des jeweiligen Blickereignisses entspricht, wobei zumindest einige dieser Intervalle jeweils eine Sequenz von mehreren der Zeitpunkte enthalten,
- Auswählen jeweils genau eines der Zeitpunkte oder einer echten Untermenge der Zeitpunkte aus jedem der Intervalle (I₁- I₆), die einer Fixation (16) oder einer Folgebewegung (15) zugeordnet sind,
- und, für jeden dieser ausgewählten Zeitpunkte, Abbilden des im dem jeweiligen Zeitpunkt zugeordneten Szenenbild (10) identifizierten Blickpunkts (12) auf eine diesem Blickpunkt (12) entsprechende Position (13) in einem Referenzbild (11).

## Beschreibung

Die vorliegende Erfindung betrifft ein Verfahren und eine Vorrichtung zum Auswerten von Ergebnissen einer Blickerfassung, also von Ergebnissen eines Eye-Trackings.

Eye-Tracking ist an sich bekannt und findet z.B. in der Verhaltensforschung oder Marktforschung Anwendung, wenn es zu untersuchen gilt, auf welchen Blickpunkte ein Blick einer Person oder auch eines Tieres wann, wie lange und/oder in welcher Reihenfolge ruht oder wie der Blick oder eine Blickrichtung sich zwischen verschiedenen Blickpunkten bewegt. Das kann z.B. darüber Aufschluss geben, wo und wie ein Anbieter angebotene Waren am günstigsten platzieren sollte, um sich der Aufmerksamkeit des Verkehrs sicher zu sein.

Bei aus dem Stand der Technik bekannten Verfahren zum Eye-Tracking werden Szenenbilder aufgenommen, die eine für einen Probanden - das Wort kann in der vorliegenden Schrift auch nachfolgend sowohl für eine Person als auch für ein Tier stehen - sichtbare Szene wiedergeben und wofür zum Beispiel eine auf einem Kopf des Probanden befestigte und sich so mit dem Kopf bewegende Kamera verwendet werden kann. Gleichzeitig wird eine Augenstellung und damit eine Blickrichtung des Probanden detektiert, was z.B. mit Hilfe von auf die Augen des Probanden gerichteten Kameras unter Anwendung geeigneter Bildauswerteverfahren geschehen kann. Nach einer Kalibrierung eines derartigen Eye-Trackers kann dann auch bei sich ändernden Augenstellungen und Kopfpositionen jeweils auf einen Blickpunkt in den Szenenbildern geschlossen werden, wobei der Begriff Blickpunkt - auch das gilt auch für die nachfolgende Beschreibung der Erfindung und der Ausführungsbeispiele-einen Punkt im Szenenbild bezeichnet, auf dem der Blick des Probanden zu einem Zeitpunkt ruht, dem das Szenenbild zugeordnet ist.

Ergebnisse einer Bückerfassung liegen also typischerweise als Informationen vor, die für jeden von einer Vielzahl aufeinanderfolgender Zeitpunkte jeweils eine zu diesem Zeitpunkt detektierte Blickrichtung und einen dadurch identifizierten Blickpunkt in einem diesem Zeitpunkt zugeordneten Szenenbild definieren. Um solche Ergebnisse auszuwerten, muss eine ausgesprochen große Informationsmenge verarbeitet werden, weil typischerweise pro Sekunde über zwanzig Szenenbilder und Bildpunkte erfasst werden. Unabhängig davon, ob die Auswertung manuell, automatisch oder interaktiv erfolgt, ist sie daher mit ausgesprochen großem Zeit- oder Rechenaufwand verbunden.

Der vorliegenden Erfindung liegt die Aufgabe zugrunde, Maßnahmen vorzuschlagen, mit denen der Aufwand für die Auswertung von Ergebnissen einer Blickerfassung beschriebener Art reduziert werden kann.

Diese Aufgabe wird erfindungsgemäß gelöst durch ein Verfahren mit den Merkmalen des Hauptanspruchs und durch eine Vorrichtung mit den Merkmalen des Nebenanspruchs. Vorteilhafte Ausgestaltungen und Weiterentwicklungen der Erfindung ergeben sich mit den Merkmalen der Unteransprüche.

Die erfindungsgemäße Vorrichtung eignet sich für die Durchführung des vorgeschlagenen Verfahrens, das nachfolgend zuerst beschrieben werden soll und mit dem sich eine signifikante Reduzierung des zur Auswertung der Ergebnisse einer Blickerfassung verbundenen Aufwands ergibt. Dieses Verfahren dient also dem Auswerten von Ergebnissen einer Blickerfassung, wobei diese Ergebnisse vorliegen oder-z.B. in der zuvor beschriebenen Weise durch Eye-Tracking - gewonnen werden als Informationen, die für jeden von einer Vielzahl aufeinanderfolgender Zeitpunkte jeweils eine zu diesem Zeitpunkt detektierte Blickrichtung und einen dadurch identifizierten Blickpunkt in einem diesem Zeitpunkt zugeordneten Szenenbild definieren. Dieses Verfahren umfasst folgende Schritte:
- Auswerten einer zeitlichen Änderung der Blickrichtung und/oder des Blickpunkts und/oder einer Augenbewegung zum Identifizieren verschiedener Blickereignisse, wobei mindestens zwei verschiedene Arten von Blickereignissen erkannt und die identifizierten Blickereignisse nach ihrer Art klassifiziert werden,
- Einteilen eines durch die Zeitpunkte aufgespannten Zeitraums in Intervalle derart, dass jedem der identifizierten Blickereignissen ein Intervall zugeordnet wird, das einer Dauer des jeweiligen Blickereignisses entspricht, wobei typischerweise zumindest einige dieser Intervalle jeweils eine Sequenz von mehreren der Zeitpunkte enthalten,
- Auswählen jeweils genau eines der Zeitpunkte oder einer echten Untermenge der Zeitpunkte aus jedem der Intervalle, die einem Blickereignis zumindest einer ausgewählten Art von Blickereignissen zugeordnet sind,
- und, für jeden dieser ausgewählten Zeitpunkte, Abbilden des im dem jeweiligen Zeitpunkt zugeordneten Szenenbild identifizierten Blickpunkts, also des durch die Ergebnisse der Blickerfassung für diesen Zeitpunkt definierten Blickpunkts, auf eine diesem Blickpunkt entsprechende Position in einem Referenzbild.

Das Einteilen des Zeitraums in die Zeitintervalle kann dabei z.B. erfolgen, indem jedem der Zeitpunkte bzw. Szenenbüder ein Attribut zugeordnet wird, das angibt, zu welchem der Intervalle bzw. Blickereignisse dieser Zeitpunkt bzw. der Zeitpunkt, dem dieses Szenenbild zugeordnet ist, gehört. Typischerweise werden die Intervalle disjunkt sein. Das Referenzbild kann für die verschiedenen Szenenbilder identisch sein. Es ist aber auch möglich, dass das Referenzbild jeweils eines aus einer Sequenz von Referenzbildern ist, die z.B. durch ein Referenzvideo definiert sein können. Ähnlich den Szenenbildern ist in diesem Fall auch das Referenzbild zeitabhängig.

Besonders zweckmäßig ist es, wenn beim Auswerten insbesondere Blickereignisse, bei denen eine Informationsaufnahme erfolgt, und Bückereignisse, bei denen keine Informationsaufnahme erfolgt, als verschiedene Arten von Blickereignissen - nämlich als Blickereignisse mit Informationsaufnahme und als Blickereignisse ohne Informationsaufnahme - erkannt werden. Die oben genannten Blickereignisse der zumindest einen ausgewählten Art von Blickereignissen werden dann die Blickereignisse mit Informationsaufnahme sein. Das Auswählen jeweils genau eines der Zeitpunkte oder einer Untermenge der Zeinpunkte erfolgt dann also in der Regel insbesondere für jedes der Intervalle, die einem Blickereignis zugeordnet sind, bei dem eine Informationsaufnahme erfolgt.

Dem Vorschlag, auf diese Weise den Aufwand für die Auswertung drastisch zu reduzieren, liegen folgende drei Einsichten zugrunde. Erstens kommt es für viele Anwendungen von Blickerfassung allein oder in erste Linie darauf an, zu ermitteln, wann ein Proband visuell welche Informationen aufnimmt. Zweitens findet zumindest eine für die Zwecke des vorgeschlagenen Verfahrens relevante Informationsaufnahme nur bei bestimmten Arten von Blickereignissen statt, insbesondere bei Fixationen oder Folgebewegungen, bei denen der Blick länger mehr oder weniger auf einem relativ zum Probanden ruhenden bzw. sich bewegenden Gegenstand ruht, nicht jedoch z.B. bei Sakkaden, die eine andere Art von Blickereignissen darstellen und bei denen eine zu rasche Augenbewegung eine in diesem Sinne relevante Informationsaufnahme praktisch unmöglich macht. Drittens ruht der Blick während eines Verlaufs einer mit Informationsaufnahme verbundenen Blickereignisses, wie einer Fixation oder einer Folgebewegung, stets mehr oder weniger auf dem gleichen Punkt oder Gegenstand, so dass es genügt, aus jeder Fixation oder Folgebewegung nur für einen Zeitpunkt das diesem Zeitpunkt zugeordnete Szenenbild und den darin identifizierten Blickpunkt zu untersuchen, um alles nötige über die Informationsaufnahme während dieses Blickereignisses zu wissen. Für die vorliegend beschriebene Erfindung ist es übrigens nicht zwingend erforderlich, Fixationen und Folgebewegungen voneinander zu unterscheiden. Zweckmäßigerweise werden diese jedoch zumindest von Ereignissen ohne Informationsaufnahme, wie beispielsweise Sakkaden, unterschieden.

Auch bei Berücksichtigung dieses Wissens ist es allerdings nicht trivial, unnötigen Aufwand bei der Auswertung der Ergebnisse der Blickerfassung zu vermeiden. Das wird erst dadurch möglich, dass durch die Auswertung der zeitlichen Änderung der Blickrichtung und/oder des Blickpunkts und/oder der Augenbewegung verschiedene Blickereignisse-vorzugsweise Blickereignisse mit Informationsaufnahme und Blickereignisse ohne Informationsaufnahme, also z.B. Sakkaden und Fixationen und/oder Folgebewegungen - als verschiedene Arten von Blickereignissen erkannt werden und der durch die Zeitpunkte aufgespannte Zeitraum derart in Intervalle eingeteilt wird, dass jedem der identifizierten Blickereignisse ein Intervall zugeordnet wird, das einer Dauer des jeweiligen Blickereignisses entspricht. Erst dadurch kann aus jedem der Intervalle, die einem Blickereignis ausgewählterArt-z.B. einem Blickereignis mit Informationsaufnahme bzw. z.B. einer Fixation oder einer Folgebewegungzugeordnet sind, jeweils genau einer der Zeitpunkte oder eine echte Untermenge der Zeitpunkte aus diesem Intervall ausgewählt werden und sichergestellt werden, dass eine Auswertung der diesen Zeitpunkten zugeordneten Szenenbilder und Blickpunkte ausreicht, ohne dass ein unerwünschter Informationsverlust riskiert wird.

Dabei ist es nicht nötig, mehr als einen Zeitpunkt aus den einzelnen Intervallen auszuwählen. Letzteres kann jedoch vorteilhaft sein, um Fehler oder Ungenauigkeiten auszuschalten bzw. zu reduzieren, die im Hinblick auf die anschließend stattfindende und möglicherweise automatisch durchgeführte Abbildung in das Referenzbild unter Umständen unvermeidbar sind. In jedem Fall ist die Zahl der ausgewählten Zeitpunkte und damit der vorzunehmenden Abbildungen von Blickpunkten in das Referenzbild deutlich kleiner als die Zahl aller Zeitpunkte, für die Informationen überSzenenbilder und Blickpunkte vorliegen.

Die Abbildung der Blickpunkte auf entsprechende Positionen im Referenzbild schließlich macht die systematische Auswertung erst möglich, weil nur die hierin bestimmten Positionen eine objektive Aussage darüber enthalten, worauf der Blick des Probanden wann und wie lange geruht hat, wenn zugelassen werden soll, dass sich der Proband bewegt und die den verschiedenen Zeitpunkten zugeordneten 5zenenbilder sich daher voneinander unterscheiden. Ein besonderer Vorteil ergibt sich nun dadurch, dass die Anzahl der durchzuführenden Abbildungen durch das vorgeschlagene Vorgehen in ausgesprochen engen Grenzen gehalten werden kann. Das Verfahren kann auch vorsehen, dass das nacheinander oder gleichzeitig beobachtete Blickverhalten mehrerer Probanden in der beschriebenen Weise analysiert wird. Die Abbildung der Blickpunkte in das Referenzbild, das dazu vorzugsweise für alle Probanden jeweils gleich gewählt wird, erlaubt dann mit ausgesprochen geringem Aufwand eine sehr objektive Auswertung der Versuchsergebnisse.

Es sei klargestellt, dass die hier im Zusammenhang mit der Identifizierung und Klassifizierung der Blickereignisse verwendeten Begriffe "Blickereinisse, bei denen eine Informationsaufnahme erfolgt" bzw. "Blickereignisse mit Informationsaufnahme" einerseits und "Blickereinisse, bei denen keine Informationsaufnahme erfolgt" bzw. "Blickereignisse ohne Informationsaufnahme" andererseits nicht implizieren sollen, dass jeweils direkt untersucht wird, ob und in welchem Maß der Proband tatsächlich während des Blickereignisses Information aufnimmt. Gemeint sei damit nur, dass verschiedene Blickereignisse, die in der Regel anhand typischer physiologischer oder motorischer Merkmale erkannt werden können, unterschieden werden und dass diese Blickereignisse aufgrund von Erfahrungswerten oder plausibler Überlegungen eingeteilt werden können in solche, bei denen mit einer Informationsaufnahme gerechnet werden kann, und solche, bei denen -z.B. aufgrund einer zu großen Bewegungsgeschwindigkeit-davon auszugehen ist, dass zumindest keine relevante Informationsaufnahme erfolgt. So kann man z.B. in diesem Sinne davon ausgehen, dass bei einer Fixation oder einer Folgebewegung eine Informationsaufnahme erfolgt, bei einer Sakkade dagegen nicht. Typische physiologische Merkmale, in denen sich die verschiedenen Arten von Blickereignissen unterscheiden können und anhand derer sie erkannt werden können, sind z.B. eine Geschwindigkeit der Augenbewegung oder eine Größe eines innerhalb eines bestimmten Zeitraums überstrichenen Winkelbereichs. Die Nennung der Blickereignisse mit Informationsaufnahme und der Blickereignisse ohne Informationsaufnahme soll schließlich auch nicht implizieren, dass genau diese und nur diese zwei Arten von Blickereignissen unterschieden werden. Es ist vielmehr möglich, dass eine größere Anzahl verschiedener Arten von Blickereignissen identifiziert wird, die unter Umständen auch einer größeren Zahl verschiedener Klassen zugeordnet werden, die jedoch jeweils in dem genannten Sinne interpretiert werden können als eines von möglicherweise verschiedenen denkbaren Blickereignissen mit bzw. ohne Informationsaufnahme.

Wie sich aus dem bereits Gesagten ergibt, können sich die verschiedenen Blickereignisse durch unterschiedliche Geschwindigkeiten und/oder Amplituden einer Augenbewegung voneinander unterscheiden. Dementsprechend kann das identifizieren der verschiedenen Blickereignisse z.B. durch Detektion und Auswerten einer Geschwindigkeit und/oder von Amplituden einer Augenbewegung erfolgen. Zusätzlich können dazu weitere Informationen ausgewertet werden, z.B. über eine Augenbeschleunigung oder einen Bildinhaft in einer Umgebung der Blickpunkte in den Szenenbildern, die dazu einer Bildauswertung unterworfen werden können, oder über eine mit einem Head-Tracker detektierbare Kopfbewegung.

Insbesondere werden bei zweckmäßigen Ausführungen des Verfahrens Sakkaden als Blickereignisse erkannt werden, bei denen keine Informationsaufnahme erfolgt, während Fixationen und/oder Folgebewegungen als Blickereignisse erkannt werden können, bei denen eine Informationsaufnahme erfolgt.

Das Verfahren kann so ausgestaltet sein, dass für jedes der Intervalle, die einem Blickereignis ausgewählter Art -z.B. einem Blickereignis mit Informationsaufnahme, beispielsweise einer Fixation oder einer Falgebewegung-zugeordnet sind, als Abbildungsziel oder "mapping end point" eine Position im Referenzbild zusammen mit einer Information über die Dauer des jeweiligen Blickereignisses gespeichert wird. Sofern genau einer der Zeitpunkte aus diesem Intervall ausgewählt ist, kann diese Position gewählt werden als die Position, auf die der Blickpunkt abgebildet wird, der für den aus diesem Intervall ausgewählten Zeitpunkt definiert ist. Wenn aus diesem Intervall mehrere der Zeitpunkte ausgewählt sind, kann diese Position als eine der Positionen oder ein - nicht notwendigerweise arithmetischer- Mittelwert oder Median der Positionen gewählt werden, auf welche die Blickpunkte abgebildet werden, die für die aus diesem Intervall ausgewählten Zeitpunkte definiert sind. Im letztgenannten Fall kann das Abbildungsziel z.B. als die Position, auf die der Blickpunkt abgebildet wird, der für den letzten aus diesem Intervall ausgewählten Zeitpunkt definiert ist, gewählt werden oder, insbesondere bei automatischer Abbildung, in Abhängigkeit von einem Maß für die Güte der jeweiligen Abbüdung. Zusätzlich zu der Information über die Dauer des jeweiligen Blickereignisses können auch weitere Attribute mit Informationen über das Blickereignis zusammen mit der Position gespeichert werden, z.B. ein Beginn und ein Ende, ein fortlaufende Nummer des Blickereignisses oder ein Zählerstand bei mehrfachem Auftreten der gleichen Position. Alle diese Informationen erlauben anschließend eine weitgehend automatisierbare Auswertung der Ergebnisse der Blickerfassung.

Eine Ausführung, bei der das Verfahren nicht nur der Auswertung der Blickerfassung, sondern auch der Blickerfassung, selbst dient, sieht vor, dass die Szenenbilder zu den genannten Zeitpunkten mit einer Kamera aufgenommen werden, wobei die Blickrichtungen mittels eines Eye-Trackers detektiert werden, der die Blickpunkte in den Szenenbildern in Abhängigkeit von den so gewonnenen Informationen über die Blickrichtungen bestimmt. Dabei kann die Kamera von einem Kopf des Probanden getragen werden, dessen Blickrichtungen durch den Eye-Tracker detektiert werden. Der Eye-Tracker kann z.B. Augenkameras zur Beobachtung jeweils eines von zwei Augen des Probanden aufweisen und eine Bildauswertung vorsehen. Letztere kann z.B. eine Pupillenposition relativ zu einem Reflex auf einer Hornhaut des jeweiligen Auges bestimmen. Die zwei Augenkameras können beispielsweise zusammen mit der erstgenannten Kamera zur Aufnahme der Szenenbilder von einem brillenartigen Träger gehalten werden.

Das Referenzbild ist bei zweckmäßigen Ausführungen der beschriebenen Auswertung ein Bild einer in den 5zenenbüdern sichtbaren Szene, das einer festen Perspektive entspricht und z.B. photographisch aufgenommen werden oder Skizzencharakter haben kann, oder eine abstrakte Wiedergabe oder Kodierung von in den Szenenbildern erkennbaren charakteristischen Merkmalen. Eine solche abstrakte Wiedergabe oder Kodierung kann z.B. für jedes charakteristische Merkmal, das berücksichtigt werden soll, durch eine Benennung oder Ortsdefinition dieses Merkmals gegeben sein.

Es kann vorgesehen sein, dass für jeden der ausgewählten Zeitpunkte jeweils das diesem Zeitpunkt zugeordnete Szenenbild zusammen mit dem darin identifizierten Blickpunkt ausgegeben wird, z.B. auf einem Bildschirm. Das kann zum manuellen Durchführen, z.B. per Mausklick, oder zum visuellen Überprüfen der Abbildung des Blickpunkts in das Referenzbild hiffreich sein. Das Referenzbild wird dazu vorzugsweise ebenfalls ausgegeben und kann z.B. neben oder über oder unter dem aktuellen Szenenbild auf dem Bildschirm gezeigt werden.

Es soll nicht ausgeschlossen werden, dass das Abbilden der Bildpunkte aus den einzelnen ausgewählten Szenenbildern in das Referenzbild manuell durchgeführt wird. Es ist jedoch zumindest möglich, dass das Abbilden der Blickpunkte auf die Positionen und damit das Bestimmen der genannten Positionen automatisch erfolgt durch
- Identifizieren einer Mehrzahl charakteristischer Merkmale und von Orten dieser Merkmale im Referenzbild mittels eines Algorithmus zur Merkmalsdetektion,
- Identifizieren dieser Merkmale und Bestimmen von Orten dieser Merkmale im jeweiligen Szenenbild durch Anwenden des gleichen oder eines entsprechenden Algorithmus auf das Szenenbild,
- Bestimmen einer Transformation, die die Orte der Merkmale in dem Szenenbild auf die entsprechenden Orte im Referenzbild, also auf die Orte der jeweiligen Merkmale im Referenzbild, abbildet, und
- Anwenden dieser Transformation auf den im jeweiligen Szenenbild identifizierten Blickpunkt.

Die Transformation kann z.B. unter der Nebenbedingung bestimmt werden, dass sie eine Homographie mit den gewünschten Abbildungseigenschaften ist. Sie kann auch als räumliche Abbildung bestimmt werden. Dabei kann zumindest ein Teil der Merkmale auf demselben Szenenobjekt liegen. Die letzten drei der vier hier genannten Schritte werden dabei jeweils für jeden der ausgewählten Zeitpunkte bzw. jedes der diesen Zeitpunkten zugeordneten Szenenbilder ausgeführt. Bei den charakteristischen Merkmalen, die durch den Algorithmus im Rahmen einer Bildauswertung identifiziert werden, kann es sich z.B. um Ecken oder Linien handeln. Entsprechende Algorithmen zur Merkmalsdetektion sind an sich bekannt, z.B. aus der Druckschrift Uns 6,711,293 B1.

Auch das Auswählen der Zeitpunkte kann sowohl manuell als auch automatisch erfolgen. So kann z.B. jeweils ein Zeitpunkt gewählt werden, der dadurch definiert ist, dass er mittig im jeweiligen Intervall liegt.

Wie sich aus dem schon Gesagten ergibt, eignet sich die vorgeschlagene Vorrichtung zum vorteilhaft aufwandsarmen Auswerten von Ergebnissen einer Blickerfassung, wobei diese Ergebnisse vorliegen oder einlesbar oder erzeugbar sind als Informationen, die für jeden von einer Vielzahl aufeinanderfolgender Zeitpunkte jeweils eine zu diesem Zeitpunkt detektierte Blickrichtung und einen dadurch identifizierten Blickpunkt in einem diesem Zeitpunkt zugeordneten Szenenbild definieren. Dazu ist diese Vorrichtung programmtechnisch eingerichtet zum Durchführen folgender Schritte:
- Auswerten einer zeitlichen Änderung der Blickrichtung und/oder des Blickpunkts und/oder einer Augenbewegung zum Identifizieren verschiedener Blickereignisse und Erkennen von mindestens zwei verschiedenen Arten von Blickereignissen sowie Klassifizieren der identifizierten Blickereignisse nach ihrer Art,
- Einteilen eines durch die Zeitpunkte aufgespannten Zeitraums in typischerweise disjunkte Intervalle derart, dass jedem der identifizierten Blickereignisse ein Intervall zugeordnet wird, das einer Dauer des jeweiligen Blickereignisses entspricht,
- Ausgeben der den Blickpunkt im Szenenbild definierenden Informationen für ausgewählte Zeitpunkte aus den Intervallen, die einem Blickereignis ausgewählter Art zugeordnet sind,
- und, für jeden der ausgewählten Zeitpunkte, Speichern einer Position in einem Referenzbild als Abbild des Blickpunkts, der für diesen Zeitpunkt definiert ist, sowie Speichern einer dieser Position als Attribut zugeordneten Information über die Dauer des Blickereignisses oder Intervalls, zu dem dieser Zeitpunkt gehört, eventuell zusammen mit weiteren Attributen mit Informationen über dieses Bückereignis, z.B. über Beginn und Ende und/oder eine fortlaufende Nummer des Blickereignisses.

Die Vorrichtung kann dabei eingerichtet sein, den Zeitraum in die Intervalle einzuteilen, indem jedem der Zeitpunkte jeweils ein Attribut zugeordnet wird, das angibt, zu welchem der Intervalle oder Blickereignisse dieser Zeitpunkt gehört. Auch hier kann das Referenzbild wieder für die verschiedenen Szenenbilder identisch oder zeitabhängig sein.

Typischerweise unterscheiden sich die genannten verschiedenen Arten derart voneinander, dass insbesondere Blickereignissen mit und Blickereignisse ohne Informationeaufnahme - im oben erläuterten Sinne-voneinander unterschieden werden. Die Vorrichtung ist also bei zweckmäßigen Ausführungen eingerichtet, Blickereignisse, bei denen einer Informationsaufnahme erfolgt, und Blickereignisse, bei denen keine Informationsaufnahme erfolgt, als verschiedene Arten von Blickereignissen zu erkennen. Dementsprechend handelt es sich bei den genannten Bückereignissen ausgewählter Art zweckmäßigerweise um die Blickereignisse mit Informationsaufnahme.

Um die verschiedenen Blickereignisse unterscheiden und insbesondere als Blickereignisse, bei denen eine Informationsaufnahme erfolgt, und als Blickereignisse, bei denen keine Informationsaufnahme erfolgt, identifizieren zu können, kann die Vorrichtung eingerichtet sein, die verschiedenen Blickereignisse in Abhängigkeit von unterschiedlichen Geschwindigkeiten und/oder Amplituden einer Augenbewegung zu identifizieren. Bei zweckmäßigen Ausgestaltungen ist die Vorrichtung insbesondere eingerichtet, Sakkaden als Blickereignisse ohne Informationsaufnahme und/oder Fixationen und/oder Folgebewegungen als Blickereignisse mit Informationsaufnahme zu erkennen.

Möglich sind Ausführungen der Vorrichtung, bei denen diese programmtechnisch eingerichtet ist, die für die ausgewählten Zeitpunkte definierten Blickpunkte automatisch auf diesen Blickpunkten entsprechende Positionen im Referenzbild abzubilden und die so bestimmten Positionen als die Abbilder der Blickpunkte zu speichern. Dazu kann sie eingerichtet sein, zum Abbilden der Blickpunkte auf die entsprechenden Positionen im Referenzbild automatisch folgende Schritte durchzuführen:
- Identifizieren einer Mehrzahl charakteristischer Merkmale und von Orten dieser Merkmale im Referenzbild mittels eines Algorithmus zur Merkmalsdetektion,
- Identifizieren dieser Merkmale und Bestimmen von Orten dieser Merkmale im jeweiligen Szenenbild durch Anwenden des gleichen oder eines entsprechenden Algorithmus auf das Szenenbild,
- Bestimmen einer Transformation, die die Orte der Merkmale in dem Szenenbild auf die so identifizierten Orte der jeweiligen Merkmale im Referenzbild abbildet, und
- Anwenden dieser Transformation auf den im jeweiligen Szenenbild identifizierten Blickpunkt.

Bei der Transformation kann es sich z.B. um eine Homographie handeln. Damit die Blickpunkte in gewünschter Weise in das Referenzbild abgebildet werden, kann die Vorrichtung also eingerichtet sein, die Transformation dabei jeweils unter der Nebenbedingung zu bestimmen, dass es sich um eine Homographie mit den geforderten Abbildungseigenschaften bezüglich der Orte der genannten Mehrzahl charakteristischer Merkmale handelt.

Es ist auch denkbar, dass die Vorrichtung eine manuelle Eingabe zur Definition der Abbildung der Blickpunkte aus den ausgewählten Szenenbildern fordert oder als Korrektur zu einer automatisch vorgeschlagenen Abbildung erlaubt. In diesem Fall kann die Vorrichtung eingerichtet sein, für jeden der ausgewählten Zeitpunkte die entsprechende Position im Referenzbild zusammen mit dem dieser Positionen zugeordneten Attribut jeweils in Abhängigkeit von einer die Position definierenden und diese mit dem Zeitpunkt oder dem diesem Zeitpunkt zugeordneten Szenenbild verknüpfenden Eingabe zu speichern.

Diese Eingabe kann z.B. für jeden der ausgewählten Zeitpunkte durch einen Mausklick in dem dazu dargestellten Referenzbild erfolgen.

Auch für die Auswahl der Zeitpunkte sind verschiedene Möglichkeiten denkbar. So kann die Vorrichtung eingerichtet sein für eine die ausgewählten Zeitpunkte als solche definierende Eingabe-z. B. jeweils durch einen Mausklick auf einem Zeitstrahl, auf dem die Intervalle dazu sichtbar dargestellt sind - oder für eine automatische Auswahl dieser Zeitpunkte durch Anwenden einer diese Zeitpunkte in Abhängigkeit von den Intervallen definierenden Vorschrift. Diese Vorschrift kann z.B. definieren, dass die jeweils mittig in den Intervallen liegenden Zeitpunkte ausgewählt werden.

Die Vorrichtung kann außerdem eingerichtet sein, sofern mehrere Zeitpunkte aus dem selben Intervall, das einem Blickereignis mit Informationsaufnahme zugeordnet ist, ausgewählt werden, als diesem Intervall zugeordnetes Abbildungsziel eine der Positionen oder einen Mittelwert der Positionen zu speichern, auf welche die Blickpunkte aus den Szenenbildern abgebildet werden, die den aus diesem Intervall ausgewählten Zeitpunkten zugeordnet sind. Der Begriff Mittelwert soll hier nicht nur einen arithmetischer Mittelwert bezeichnen können, sondern auch z.B. einen Median.

Es kann vorgesehen sein, dass die Vorrichtung ferner einen Eye-Tracker zum Detektieren der Blickrichtungen und eine Kamera zum Aufnehmen der Szenenbilder aufweist. In diesem Fall handelt um eine Vorrichtung zur Blickerfassung und Auswertung der Ergebnisse dieser Blickerfassung. Der Eye-Tracker ist dann vorzugsweise mit einer Halterung zum Befestigen auf oder an einem Kopf des Probanden versehen, um eine freie Bewegung des Probanden zu erlauben, damit möglichst realistische Informationen über dessen Sehgewohnheiten erhalten werden können. Die Kamera zum Aufnehmen der Szenenbilder ist typischerweise Bestandteil des Eye-Trackers und kann von gleichen Halterung getragen werden. Das erleichtert eine Kalibrierung des Eye-Trackers.

Schließlich kann die Vorrichtung auch eine Kamera zum Aufnehmen des Referenzbildes aufweisen.

Das eingangs beschriebene Verfahren kann insbesondere mit einer Vorrichtung hier beschriebener Art durchgeführt werden. Andersherum kann die beschriebene Vorrichtung zusätzlich zu ihren hier erläuterten wesentlichen oder optionalen Merkmalen zusätzlich eingerichtet sein zur Durchführung jeder beliebigen beschriebenen Ausführung oder Ausgestaltung des eingangs beschriebenen Verfahrens.

Ein Ausführungsbeispiel der Erfindung wird nachfolgend anhand der Figuren 1 bis 6 erläutert. Es zeigt
- Fig. 1: in schematisierter Darstellung eine Vorrichtung zur Blickerfassung und zum Auswertung von Ergebnissen dieser Blickerfassung,
- Fig. 2: ein mit dieser Vorrichtung aufgenommenes Szenenbild und, rechts daneben, ein ebenfalls mit dieser Vorrichtung aufgenommenes Referenzbild, wobei durch einen Pfeil veranschaulicht ist, wie ein im Szenenbild identifizierter Blickpunkt auf eine entsprechende Position im Referenzbild abgebildet wird,
- Fig. 3: In diagrammatischer Darstellung einen zeitlichen Verlauf einer Geschwindigkeit einer über einen Beobachtungszeitraum mit der Vorrichtung erfassten Augenbewegung und
- Fig. 4: einen Zeitstrahl, auf dem dieser Beobachtungszeitraum in mehrere Intervalle aufgeteilt dargestellt ist, wobei die Intervalle verschiedenen mit der Vorrichtung identifizierten Blickereignissen entsprechen.

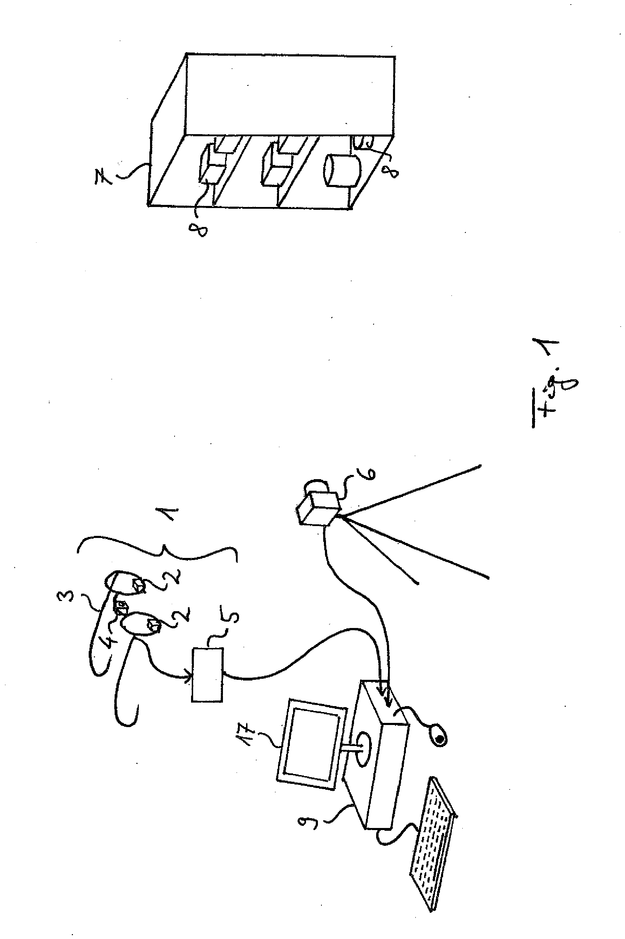

Bei der in Fig. 1 gezeigten Vorrichtung handelt es sich also um eine Anordnung, die einen Eye-Tracker 1 für eine Blickerfassung umfasst und zusätzlich eingerichtet ist, mit diesem Eye-Tracker 1 gewonnene Ergebnisse der Blickerfassung auf besonders zweckmäßige Weise mit geringem Aufwand auszuwerten.

Der Eye-Tracker 1 weist zwei Augenkameras 2 auf, die von einem brillenartigen Gestell 3 gehalten werden und auf zwei Augen eines hier nicht dargestellten Probanden gerichtet sind, der das Gestell 3 trägt. Außerdem weist der Eye-Tracker 1 eine vom selben Gestell 3 gehaltene Kamera 4 zum Aufnehmen von Szenenbildern auf, die dadurch so angeordnet ist, dass sie sich mit einem Kopf des Probanden mitbewegt und dass ein Gesichtsfeld dieser Kamera 4 jeweils ungefähr einem Gesichtsfeld des Probanden entspricht.

Außerdem umfasst der Eye-Tracker eine Recheneinheit 5, die einen Output der Augenkameras 2 mittels Bildauswerteverfahren analysiert und dadurch zu einer Vielzahl von in engem Abstand aufeinanderfolgenden Zeitpunkten jeweils eine aktuelle Blickrichtung des Probanden bestimmt. Dazu kann die Recheneinheit 5 z.B. eingerichtet sein, eine relative Lage von den Pupillen der Augen zu definierten Reflexionen auf der Hornhaut der Augen zu bestimmen, wobei die Reflexionen durch entsprechend gezielte Beleuchtung der Augen erzeugt werden können. Die Kamera 4 nimmt zu jedem der genannten Zeitpunkte jeweils ein diesem Zeitpunkt zugeordnetes Szenenbild auf. Diese Szenenbilder bilden also aufeinanderfolgende Frames eines mit der Kamera 4 aufgezeichneten Films. In Abhängigkeit von den bestimmten Blickrichtungen identifiziert der Eye-Tracker 1 mit der Recheneinheit 5 nun für jeden der Zeitpunkte einen Blickpunkt in dem diesem Zeitpunkt zugeordneten Szenenbild, wobei der Blickpunkt - auch als "gaze point" oder "focal point" bezeichnet - jeweils den Punkt im Szenenbild bezeichnet, auf den der Proband zum gegebenen Zeitpunkt schaut.

Neben dem Eye-Tracker 1 weist die Vorrichtung noch eine weitere Kamera 6 auf, mit der ein Referenzbild aufgenommen wird. Bei dem Referenzbild handelt es sich hier um ein aus einer definierten Perspektive aufgenommenes photographisches Bild einer Szene, die der für den Probanden sichtbaren Szene entspricht und die auch durch die Szenenbilder wiedergegeben wird. Diese Szene enthält im vorliegenden Fall ein Regal 7, bei dem es sich z.B. um ein Warenregal in einem Supermarkt handeln kann und in dem mehrere Gegenstände 8, z.B. verschiedene Waren, platziert sind. Es sind auch Ausführungen denkbar, bei denen die Kamera 6 durch eine Videokamera gegeben und das Referenzbild zeitabhängig ist.

Schließlich weist die Vorrichtung eine Auswerteeinheit 9 zum Auswerten der mit dem Eye-Tracker 1 gewonnenen Ergebnisse auf. Bei diesen Ergebnissen handelt es sich um in beschriebener Weise gewonnene Informationen, die für jeden der genannten Zeitpunkte jeweils die zu diesem Zeitpunkt detektierte Blickrichtung und den Blickpunkt definieren, der in dem diesem Zeitpunkt zugeordneten Szenenbild identifiziert worden ist.

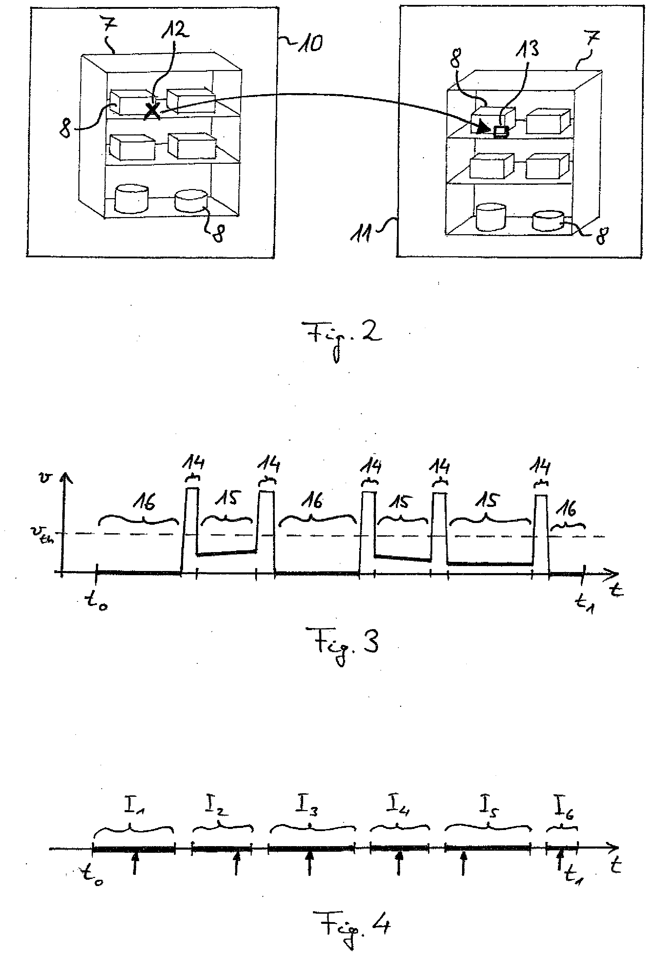

In Fig. 2 ist links beispielhaft eines der mit der Kamera 4 aufgenommenen 5zenenbilder 10 dargestellt, während rechts daneben das mit der Kamera 6 aufgenommene Referenzbild 11 gezeigt ist. Statt dieses photographischen Referenzbildes 11 könnte bei einer Abwandlung auch eine skizzenhafte Darstellung der Szene als Referenzbild dienen oder eine abstrakte Wiedergabe, bei der in den Szenenbildern erkennbare charakteristische Merkmafe-z.B. die im Regal 7 platzierten Gegenstände 8-einfach durch deren Bezeichnung oder Ort kodiert sind. In dem Szenenbild 10 ist auch der in diesem Szenenbild 10 identifizierte Blickpunkte 12 in Form eines X dargestellt.

Für eine systematische Auswertung der Ergebnisse der Blickerfassung sollen nun Im Referenzbild 11 Positionen ermittelt werden, auf die der Proband geschaut hat, wobei diese Positionen zusammen mit Informationen darüber, wann und wie lange der Proband dorthin geschaut hat, gespeichert werden sollen. In Fig. 2 ist durch einen Pfeil veranschaulicht, wie der Blickpunkt 12 dazu auf eine diesem Blickpunkt 12 entsprechende Position 13 abgebildet wird. Damit nicht für jedes der Szenenbilder eine solche Abbildung durchgeführt werden muss, um die gewünschten Informationen zu erhalten, wird nun in der nachfolgend beschriebenen Weise vorgegangen.

Die entsprechend programmtechnisch eingerichtete Auswerteeinheit 9 erfasst eine zeitliche Änderung der Blickrichtung und/oder des Blickpunkts durch Vergleich der für die aufeinanderfolgenden Zeitpunkte vorliegenden Informationen über Blickrichtung und Blickpunkt. In Fig. 3 ist ein so erfasster zeitlicher Verlauf einer Geschwindigkeit v einer Augenbewegung des Probanden innerhalb eines Beobachtungszeitraums dargestellt, wobei sich dieser Beobachtungszeitraum von t₀ bis t₁ erstreckt. Durch Vergleich der jeweils ermittelten Geschwindigkeiten v mit einem Schwellwert vₜₕ werden verschiedene Blickereignisse identifiziert, und zwar Sakkaden 14, bei denen sich die Augen sehr schnell bewegen, so dass v > vₜₕ gilt, Folgebewegungen 15, bei denen sich die Augen wesentlich langsamer bewegen, so dass v < vₜₕ gilt, und Fixationen 16, bei denen die Augen still stehen. Die so identifizierten Blickereignisse werden nach ihrer Art klassifiziert, im hier gezeigten Beispiel also jeweils als Sakkade 14, Folgebewegung 15 oder Fixation 16. Dabei werden Sakkaden 14 als eine Art von Blickereignissen erkannt, bei der keine Informationsaufnahme erfolgt, während Folgebewegungen 15 und Fixationen 16 als zwei Arten von Blickereignissen erkannt werden, bei denen eine Informationsaufnahme erfolgt. Für das beschriebene Verfahren ist es jedoch nicht unbedingt erforderlich, zwischen Folgebewegungen 15 und Fixationen 16 zu unterscheiden. Diese beiden Arten von Bückereignissen können bei der Klassifizierung auch gleich behandelt werden und einfach als Ereignisse der Kategorie Blickereignis mit Informationsaufnahme klassifiziert werden.

Der vorhergehende Absatz beschreibt beispielhaft nur eine verhältnismäßig einfache Methode zum Identifizieren der verschiedenen Blickereignisse, Um die Blickereignisse verschiedener Art zu erkennen und insbesondere als Blickereignisse mit Informationsaufnahme und Blickereignisse ohne Informationsaufnahme zu unterscheiden, können zusätzlich weitere Maßnahmen vorgesehen sein, z.B. eine Auswertung einer zeitgleich mit einem Head-Tracker oder einer IMU detektierten Kopfbewegung und/oder eine Analyse von Bildinhalten an den Blickpunkten 12 durch eine Auswertung von Szenenkameradaten. Alternativ oder zusätzlich zu der beschriebenen Auswertung der Geschwindigkeit v der Augenbewegung kann auch durch Vergleich der Blickrichtungen und/oder Blickpunkte 12 zu den verschiedenen aufeinander folgenden Zeitpunkten eine Amplitude von Augenbewegungen untersucht werden und das jeweilige Blickereignis abhängig von der erfassten Amplitude identifiziert und klassifiziert werden. Als Amplitude sei dabei ein bei einer Augenbewegung innerhalb eines bestimmten Zeitraums beobachteter größter Blickwinkelunterschied bezeichnet. So können z.B. Mikrosakkaden, bei denen trotz großer Geschwindigkeiten mit einer Informationsaufnahme zu rechnen ist, von eigentlichen Sakkaden, die als Blickereignisse ohne Informationsaufnahme behandelt werden können, unterschieden werden. Auch eine zusätzlich oder stattdessen zum Identifizieren der Blickereignisse dienende Erfassung von Beschleunigungen der Augen ist denkbar.

Nach dem Identifizieren und Klassifizieren der Blickereignisse wird der genannte Beobachtungszeitraum durch die Auswerteeinheit 9 in disjunkte Intervalle eingeteilt, so dass jedem der identifizierten Blickereignisse ein Intervall zugeordnet wird, das einer Dauer des jeweiligen Blickereignisses entspricht. Das ist in Fig. 4 veranschaulicht, die einen Zeitstrahl mit den Intervallen zeigt. Die Intervalle, die einer Fixation 16 oder einer Folgebewegung 15 zugeordnet sind, sind dort als Intervalle I₁, I₂, I₃, I₄, I₅ und I₆ bezeichnet. Zumindest diese Intervalle I₁ bis I₆ enthalten jeweils eine Mehrzahl der genannten Zeitpunkte. Das Einteilen des Beobachtungszeitraums in die Intervalle geschieht, indem jedem der Zeitpunkte jeweils ein Attribut zugeordnet wird, das angibt, zu welchem der Intervalle oder Blickereignisse dieser Zeitpunkt gehört.

Nun wird für jedes der Intervalle I₁ bis I₆, die einer Fixation 16 oder einer Folgebewegung 15 zugeordnet sind, ein Zeitpunkt ausgewählt. Die ausgewählten Zeitpunkte sind in Fig. 4 jeweils durch einen Pfeil veranschaulicht. Das Auswählen dieser Zeitpunkte kann je nach Ausführung entweder automatisch erfolgen durch Anwenden einer Vorschrift, die die ausgewählten Zeitpunkte z.B. jeweils als mittig im jeweiligen Intervall liegende Zeitpunkte oder auf irgendeine Weise optimal für den verwendeten Algorithmus definiert, oder manuell durch Anklicken der gewünschten Zeitpunkte auf einem zu diesem Zweck auf einem Bildschirm 17 der Auswerteeinheit 9 wiedergegebenen Zeitstrahl. Der Zeitstrahl kann dabei in der in Fig. 4 gezeigten Art wiedergegeben werden in einer Weise, die die in Frage kommenden Intervalle I₁ bis I₆ sichtbar macht.

Die Auswerteeinheit 9 ist so eingerichtet, dass für jeden der ausgewählten Zeitpunkte jeweils das diesem Zeitpunkt zugeordnete Szenenbild 10 zusammen mit dem darin identifizierten Blickpunkt 12 auf dem Bildschirm 17 ausgegeben wird, wobei das Referenzbild 11 jeweils in der in Fig. 2 gezeigten Art neben oder über oder unter dem Szenenbild 10 auf dem Bildschirm 17 dargestellt wird.

Für jeden dieser ausgewählten Zeitpunkte-und nur für diese Zeitpunktewird nun jeweils der Blickpunkt 12, der in dem diesem Zeitpunkt zugeordneten Szenenbild 10 identifiziert ist, auf die diesem Bildpunkt 12 entsprechende Position 13 im Referenzbild 11 abgebildet. Dabei wird für jeden der ausgewählten Zeitpunkte jeweils die Position 13 im Referenzbild 11, die dem diesem Zeitpunkt zugeordneten Blickpunkt 12 entspricht, als Abbild des Blickpunkts 12 zusammen mit einer dieser Position 13 als Attribut zugeordneten Information über das Blickereignis oder über das Intervall, zu dem dieser Zeitpunkt gehört, gespeichert. Dieser Information wird insbesondere die Dauer des jeweiligen Blickereignisses oder Intervalls entnehmbar sein. Zusätzlich können auch weitere Attribute mit Informationen über dieses Blickereignis, z.B. Angaben über Beginn und Ende des Blickereignisses, eine fortlaufende Nummer des Blickereignisses oder ein Zählerstand bei mehrfachem Auftreten der gleichen Position 13, jeweils zusammen mit der Position 13 gespeichert werden.

Es kann vorgesehen sein, dass das Abbilden der Blickpunkte 12 aus den ausgewählten Szenenbildern 11 manuellen durchgeführt wird. Das kann z.B. jeweils durch einen Mausklick geschehen, nachdem eine Eingabemarkierung oder ein Cursor auf die jeweilige Position 13 im auf dem Bildschirm wiedergegebenen Referenzbild geführt worden ist. Die Auswerteeinheit 9 ist dann also eingerichtet, für jeden der ausgewählten Zeitpunkte die entsprechende Position 13 im Referenzbild 12 zusammen mit dem dieser Positionen 13 zugeordneten Attribut jeweils in Abhängigkeit von einer die Position 13 definierenden und diese mit dem Zeitpunkt oder dem diesem Zeitpunkt zugeordneten Szenenbild 10 verknüpfenden Eingabe zu speichern. Die Verknüpfung kann dabei z.B. dadurch geschehen, dass die die Abbildung definierende Eingabe immer unmittelbar auf die den Zeitpunkt auswählende Eingabe folgt.

Die Auswerteeinheit 9 kann aber auch eingerichtet sein, die für die ausgewählten Zeitpunkte definierten Blickpunkte 12 automatisch auf die diesen Blickpunkten 12 entsprechenden Positionen 13 abzubilden und die so automatisch bestimmten Positionen als Abbilder der Blickpunkte 12 zu speichern. Die Darstellung der Szenenbilder 10 und des Referenzbilds 11 kann dann dazu dienen, die automatische Abbildung des Blickpunkts 12 in das Referenzbild 11 visuell zu überprüfen, wenn auch die automatisch ermittelte Position 13 dort sichtbar dargestellt wird.

Zum automatischen Abbilden der Blickpunkte 12 auf die entsprechenden Positionen 13 im Referenzbild 11 kann die Auswerteeinheit 9 eingerichtet sein, eine Mehrzahl charakteristischer Merkmale, wie z.B. Ecken oder Kanten, und Orte dieser Merkmale im Referenzbild 11 mittels eines Algorithmus zur Merkmalsdetektion zu identifizieren und außerdem für jeden der ausgewählten Zeitpunkte jeweils folgende Schritte durchzuführen:
- Identifizieren dieser charakteristischen Merkmale und Bestimmen von Orten dieser Merkmale im jeweiligen Szenenbild 10 durch Anwenden des gleichen Algorithmus auf das Szenenbifd 10,
- Bestimmen einer Transformation, die eine Homographie ist und die Orte der Merkmale in dem Szenenbild 10 auf die so identifizierten Orte der jeweiligen Merkmale im Referenzbild 11 abbildet, und
- Anwenden dieser Transformation auf den im jeweiligen Szenenbild 10 identifizierten Blickpunkt 12.

Anders als vorstehend beschrieben ist es auch möglich, dass für jedes der Intervalle I₁, bis I₆ oder für einige dieser Intervalle I₁ bis I₆ jeweils mehrere Zeitpunkte ausgewählt werden, um durch fehlerhafte Abbildungen verursachte Ungenauigkeiten zu minimieren. In jedem Fall werden jeweils deutlich weniger Zeitpunkte ausgewählt, als das jeweilige Intervall enthält. Gemeint sind mit dem Begriff "Zeitpunkt" hier natürlich immer nur Zeitpunkte aus der endlichen Zahl von Zeitpunkten, für die Informationen über Blickpunkte vorliegen. Sofern mehrere Zeitpunkte aus einem Intervall ausgewählt werden, für die jeweils eine Abbildung beschriebener Art und mithin jeweils eine Position 13 im Referenzbild 11 definiert wird, kann als diesem Intervall zugeordnetes Abbildungsziel eine dieser Positionen 13 oder ein Mittelwert oder Median dieser Positionen 13 gespeichert werden zusammen mit der dieser Position 13 als Attribut zugeordneten Information über die Dauer des Intervalls.

Die so mit verhältnismäßig geringem Aufwand und daher verhältnismäßig rasch ermittelten und gespeicherten Informationen enthalten alle Angaben, die für eine weitere Auswertung der Ergebnisse der Blickerkennung benötigt werden, und können dazu auf verschiedenste Weise maschinell oder auch manuell statistisch ausgewertet werden.

## Patentansprüche

1. Verfahren zum Auswerten von Ergebnissen einer Blickerfassung, wobei diese Ergebnisse vorliegen oder gewonnen werden als Informationen, die für jeden von einer Vielzahl aufeinanderfolgender Zeitpunkte jeweils eine zu diesem Zeitpunkt detektierte Blickrichtung und einen dadurch identifizierten Blickpunkt (12) in einem diesem Zeitpunkt zugeordneten Szenenbild (10) definieren, wobei das Verfahren folgende Schritte umfasst:
- Auswerten einer zeitlichen Änderung der Blickrichtung und/oder des Blickpunkts (12) und/oder einer Augenbewegung zum Identifizieren verschiedener Blickereignisse, wobei mindestens zwei verschiedene Arten von Blickereignissen erkannt und die identifizierten Blickereignisse nach ihrer Art klassifiziert werden,
- Einteilen eines durch die Zeitpunkte aufgespannten Zeitraums in Intervalle derart, dass jedem der identifizierten Blickereignisse ein Intervall zugeordnet wird, das einer Dauer des jeweiligen Blickereignisses entspricht,
- Auswählen jeweils genau eines der Zeitpunkte oder einer echten Untermenge der Zeitpunkte aus jedem der Intervalle (I₁- I₆), die einem Blickereignis zumindest einer ausgewählten Art von Blickereignissen zugeordnet sind,
- und, für jeden dieser ausgewählten Zeitpunkte, Abbilden des im dem jeweiligen Zeitpunkt zugeordneten Szenenbild (10) identifizierten Blickpunkts (12) auf eine diesem Blickpunkt (12) entsprechende Position (13) in einem Referenzbild (11).

2. Verfahren nach Anspruch 1, **dadurch gekennzeichnet, dass** beim Auswerten Blickereignisse, bei denen eine Informationsaufnahme erfolgt, und Blickereignisse, bei denen keine Informationsaufnahme erfolgt, als verschiedene Arten von Blickereignissen erkannt werden, wobei das Auswählen jeweils genau eines der Zeitpunkte oder einer Untermenge der Zeitpunkte für jedes der Intervalle (I₁-I₆) erfolgt, die einem Blickereignis mit Informationsaufnahme zugeordnet sind.

3. Verfahren nach einem der Ansprüche 1 oder 2, **dadurch gekennzeichnet, dass** die verschiedenen Blickereignisse sich durch unterschiedliche Geschwindigkeiten (v) und/oder Amplituden einer Augenbewegung voneinander unterscheiden und/oder dass Sakkaden (14) als Blickereignisse erkannt werden, bei denen keine Informationsaufnahme erfolgt, und/oder dass Fixationen (16) und/oder Folgebewegungen (15) als Blickereignisse erkannt werden, bei denen eine Informationsaufnahme erfolgt.

4. Verfahren nach einem der Ansprüche 1 bis 3, **dadurch gekennzeichnet, dass** für jedes der Intervalle (I₁ - I₆), die einem Blickereignis ausgewählter Art zugeordnet sind, als Abbildungsziel eine Position (13) im Referenzbild (11) zusammen mit einer Information über die Dauer des jeweiligen Blickereignisses gespeichert wird, wobei diese Position (13) gewählt wird
- als die Position (13), auf die der Blickpurfkt (12) abgebildet wird, der für den aus diesem Intervall (I₁ - I₆) ausgewählten Zeitpunkt definiert ist, sofern genau einer der Zeitpunkte aus diesem Intervall (I₁ - I₆) ausgewählt ist,
oder
- als eine der Positionen (13) oder ein Mittelwert der Positionen (13), auf welche die Blickpunkte (12) abgebildet werden, die für die aus diesem Intervall (I₁ -I₆) ausgewählten Zeitpunkte definiert sind, sofern mehrere der Zeitpunkte aus diesem Intervall (I₁ - I₆) ausgewählt sind.

5. Verfahren nach einem der Ansprüche 1 bis 4, **dadurch gekennzeichnet, dass** die Szenenbilder (10) zu den genannten Zeitpunkten mit einer Kamera (4) aufgenommen werden, wobei die Blickrichtungen mittels eines Eye-Trackers (1) detektiert werden, der die Blickpunkte (12) in den Szenenbildern (10) in Abhängigkeit von den so gewonnenen Informationen über die Blickrichtungen bestimmt, wobei die Kamera (4) dabei vorzugsweise von einem Kopf eines Probanden getragen wird, dessen Blickrichtungen durch den Eye-Tracker (1) detektiert werden.

6. Verfahren nach einem der Ansprüche 1 bis 5, **dadurch gekennzeichnet, dass** das Referenzbild (11) ein Bild einer in den Szenenbildern (10) sichtbaren Szene ist, das einer festen Perspektive entspricht, oder eine abstrakte Wiedergabe oder Kodierung von in den Szenenbildern (10) erkennbaren charakteristischen Merkmalen ist.

7. Verfahren nach einem der Ansprüche 1 bis 6, **dadurch gekennzeichnet, dass** für jeden der ausgewählten Zeitpunkte jeweils das diesem Zeitpunkt zugeordnete Szenenbild (10) ausgegeben wird zum manuellen Durchführen oder visuellen Überprüfen der Abbildung des Blickpunkts (12) in das Referenzbild (11).

8. Verfahren nach einem der Ansprüche 1 bis 7, **dadurch gekennzeichnet, dass** das Abbilden der Blickpunkte (12) auf die Positionen (13) automatisch erfolgt durch
- Identifizieren einer Mehrzahl charakteristischer Merkmale und Orte dieser Merkmale im Referenzbild (11) mittels eines Algorithmus zur Merkmalsdetektion,
- Identifizieren dieser Merkmale und Bestimmen von Orten dieser Merkmale im jeweiligen Szenenbild (10) durch Anwenden des gleichen oder eines entsprechenden Algorithmus auf das Szenenbild (10),
- Bestimmen einer Transformation, die die Orte der Merkmale in dem Szenenbild (10) auf die entsprechenden Orte im Referenzbild (11) abbildet, und
- Anwenden dieser Transformation auf den im jeweiligen Szenenbild (10) identifizierten Blickpunkt (12).

9. Vorrichtung zum Auswerten von Ergebnissen einer Blickerfassung, wobei diese Ergebnisse vorliegen oder einlesbar oder erzeugbar sind als Informationen, die für jeden von einer Vielzahl aufeinanderfolgender Zeitpunkte jeweils eine zu diesem Zeitpunkt detektierte Blickrichtung und einen dadurch identifizierten Blickpunkt (12) in einem diesem Zeitpunkt zugeordneten Szenenbild (10) definieren, wobei die Vorrichtung eingerichtet ist zum Durchführen folgender Schritte:
- Auswerten einer zeitlichen Änderung der Blickrichtung und/oder des Blickpunkts (12) und/oder einer Augenbewegung zum Identifizieren verschiedener Blickereignisse und Erkennen von mindestens zwei verschiedenen Arten von Blickereignissen sowie Klassifizieren der identifizierten Blickereignisse nach ihrer Art,
- Einteilen eines durch die Zeitpunkte aufgespannten Zeitraums in Intervalle derart, dass jedem der identifizierten Blickereignisse ein Intervall zugeordnet wird, das einer Dauer des jeweiligen Blickereignisses entspricht,
- Ausgeben der den Blickpunkt (12) im Szenenbild (10) definierenden Informationen für ausgewählte Zeitpunkte aus den Intervallen (I₁ - I₆), die einem Blickereignis ausgewählter Art zugeordnet sind,
- und, für jeden der ausgewählten Zeitpunkte, Speichern einer Position (13) in einem Referenzbild (11) als Abbild des Blickpunkts (12), der für diesen Zeitpunkt definiert ist, sowie Speichern einer dieser Position (13) als Attribut zugeordneten Information über die Dauer des Blickereignisses oder Intervalls (I₁ - I₆), zu dem dieser Zeitpunkt gehört.

10. Vorrichtung nach Anspruch 9, **dadurch gekennzeichnet, dass** sie eingerichtet ist, Blickereignisse, bei denen eine Informationsaufnahme erfolgt, und Blickereignisse, bei denen keine Informationsaufnahme erfolgt, als verschiedene Arten von Blickereignissen zu erkennen.

11. Vorrichtung nach einem der Ansprüche 9 oder 10, **dadurch gekennzeichnet, dass** sie eingerichtet ist, zum Einteilen des Zeitraums in die Intervalle jedem der Zeitpunkte jeweils ein Attribut zuzuordnen, das angibt, zu welchem der Intervalle oder Blickereignisse dieser Zeitpunkt gehört.

12. Vorrichtung nach einem der Ansprüche 9 bis 11, **dadurch gekennzeichnet, dass** die Vorrichtung eingerichtet ist, die verschiedenen Blickereignisse in Abhängigkeit von unterschiedliche Geschwindigkeiten (v) und/oder Amplituden einer Augenbewegung zu identifizieren und/oder Sakkaden (14) als Blickereignisse zu erkennen, bei denen keine Informationsaufnahme erfolgt, und/oder Fixationen (16) und/oder Folgebewegungen (15) als Blickereignisse zu erkennen, bei denen eine Informationsaufnahme erfolgt.

13. Vorrichtung nach einem der Ansprüche 9 bis 12, **dadurch gekennzeichnet, dass** sie eingerichtet ist, die für die ausgewählten Zeitpunkte definierten Blickpunkte (12) automatisch auf diesen Blickpunkten (12) entsprechende Positionen (13) im Referenzbild (11) abzubilden und die so bestimmten Positionen (13) als die Abbilder der Blickpunkte (12) zu speichern.

14. Vorrichtung nach Anspruch 13, **dadurch gekennzeichnet, dass** sie eingerichtet ist, zum automatischen Abbilden der Blickpunkte (12) auf die entsprechenden Positionen (13) im Referenzbild (11) folgende Schritte durchzuführen:
- Identifizieren einer Mehrzahl charakteristischer Merkmale und Orte dieser Merkmale im Referenzbild (11) mittels eines Algorithmus zur Merkmalsdetektion,
- Identifizieren dieser Merkmale und Bestimmen von Orten dieser Merkmale im jeweiligen Szenenbild (10) durch Anwenden des gleichen oder eines entsprechenden Algorithmus auf das Szenenbild (10),
- Bestimmen einer Transformation, die die Orte der Merkmale in dem Szenenbifd (10) auf die so identifizierten Orte derjeweiligen Merkmale im Iteferenzbild (11) abbildet, und
- Anwenden dieser Transformation auf den im jeweiligen Szenenbild (10) identifizierten Blickpunkt (12).

15. Vorrichtung nach einem der Ansprüche 9 bis 12, **dadurch gekennzeichnet, dass** sie eingerichtet ist, für jeden der ausgewählten Zeitpunkte die entsprechende Position (13) im Referenzbild (11) zusammen mit dem dieser Positionen (13) zugeordneten Attribut jeweils in Abhängigkeit von einer die Position (13) definierenden und diese mit dem Zeitpunkt oder dem diesem Zeitpunkt zugeordneten Szenenbild (10) verknüpfenden Eingabe zu speichern.

16. Vorrichtung nach einem der Ansprüche 9 bis 15, **dadurch gekennzeichnet, dass** sie eingerichtet ist für eine die ausgewählten Zeitpunkte als solche definierende Eingabe oder für eine automatische Auswahl dieser Zeitpunkte durch Anwenden einer diese Zeitpunkte in Abhängigkeit von den Intervallen (I₁- I₆) definierenden Vorschrift.

17. Vorrichtung nach einem der Ansprüche 9 bis 16, **dadurch gekennzeichnet, dass** sie ferner einen Eye-Tracker (1) zum Detektieren der Blickrichtungen mit einer Kamera (4) zum Aufnehmen der Szenenbilder (10) und/oder eine Kamera (6) zum Aufnehmen des Referenzbildes (11) aufweist.
